(19) Europäisches Patentamt
European Patent Office
Office européen des brevets

(11) EP 3 458 285 B1

(12) # FASCICULE DE BREVET EUROPEEN

(45) Date de publication et mention de la délivrance du brevet:
**11.11.2020 Bulletin 2020/46**

(21) Numéro de dépôt: **17730856.6**

(22) Date de dépôt: **18.05.2017**

(51) Int Cl.:
***B60C 9/18*** (2006.01) ***B60C 9/20*** (2006.01)
***B60C 1/00*** (2006.01) ***C08K 3/04*** (2006.01)

(86) Numéro de dépôt international:
**PCT/FR2017/051200**

(87) Numéro de publication internationale:
**WO 2017/198953 (23.11.2017 Gazette 2017/47)**

(54) **PNEUMATIQUE PRESENTANT UNE COUCHE DE PROTECTION AVEC DES PROPRIETES D'ENDURANCE AMELIOREES**

REIFEN MIT EINER SCHUTZSCHICHT MIT VERBESSERTEN DAUERFESTIGKEITSEIGENSCHAFTEN

TYRE COMPRISING A PROTECTIVE LAYER HAVING IMPROVED ENDURANCE PROPERTIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2016 FR 1654495**

(43) Date de publication de la demande:
**27.03.2019 Bulletin 2019/13**

(73) Titulaire: **Compagnie Générale des Etablissements Michelin**
**63000 Clermont-Ferrand (FR)**

(72) Inventeurs:
- **SALGUES, Nathalie**
**63040 Clermont-Ferrand Cedex 9 (FR)**
- **BESSON, Jacques**
**63040 Clermont-Ferrand Cedex 9 (FR)**

(74) Mandataire: **Le Cam, Stéphane Georges Elie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**FR-A1- 3 022 839** **FR-A1- 3 022 841**
**FR-A1- 3 022 843**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Les couches de protection sont habituellement présentes pour assurer la protection des autres couches de l'armature de sommet notamment vis-à-vis à des agressions mécaniques ou physico-chimiques, susceptibles de se propager à travers la bande de roulement radialement vers l'intérieur du pneumatique afin d'assurer les performances d'endurance souhaitée de l'armature sommet.

Les couches de protection peuvent avoir des largeurs axiales supérieures à celles des autres couches de l'armature sommet. Selon d'autres configurations elles sont plus étroites et centrées sur le plan médian circonférentiel du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Il est notamment connu d'introduire une couche de mélange caoutchouteux entre les extrémités des couches de travail pour créer un découplage entre lesdites extrémités pour limiter les contraintes de cisaillement. De telles couches de découplage doivent toutefois présenter une très bonne cohésion. De telles couches de mélanges caoutchouteux sont par exemple décrites dans la demande de brevet WO 2004/076204.

Il est également connu pour réaliser des pneumatiques à bande de roulement très large ou bien pour conférer à des pneumatiques d'une dimension donnée des capacités de charges plus importantes d'introduire une couche d'éléments de renforcement circonférentiels. La demande de brevet WO 99/24269 décrit par exemple la présence d'une telle couche d'éléments de renforcement circonférentiels.

La couche d'éléments de renforcement circonférentiels est usuellement constituée par au moins un câble métallique enroulé pour former une spire dont l'angle de pose par rapport à la direction circonférentielle est inférieur à 2.5°.

Les résultats ainsi obtenus en termes d'endurance et d'usure lors de roulages prolongés sur routes à grande vitesse sont le plus souvent satisfaisants. Pour améliorer la durée d'utilisation d'un pneumatique, celui-ci peut encore être rechapé.

Un rechapage consiste à retirer la bande de roulement usée du pneumatique pour la remplacer par une nouvelle bande de roulement. La première étape d'un rechapage, qui s'appelle usuellement étape de cardage consiste donc à éliminer ce qui reste de la bande de roulement usée pour mettre en place la nouvelle bande de roulement lors d'une étape finale. Lors de l'étape de cardage, le but étant d'éliminer au mieux ce qui reste de la bande de roulement, il est possible que les outils mécaniques viennent au plus près des éléments de renforcement de la couche d'éléments de renforcement la plus extérieure de l'armature sommet du pneumatique.

La couche d'éléments de renforcement concernée est usuellement une couche de protection qui comme expliqué précédemment a subi des agressions diverses pouvant conduire à des dégradations desdits éléments de renforcement et notamment des ruptures. Une telle couche peut toutefois continuer à jouer pleinement son rôle de protection contre les diverses agressions que peut subir un pneumatique à ce niveau.

Toutefois, il a déjà été mis en évidence que la rupture de câbles dits « inextensibles » conduit à un foisonnement au niveau de la rupture dès lors que la corrosion se propage. Un tel foisonnement des câbles peut conduire à un arrachement desdits éléments de renforcement lors d'une étape de cardage, les outils restant accrochés au niveau du foisonnement.

L'utilisation de câbles élastiques permet de limiter ce type de problème ; en effet, des câbles élastiques ont tendance à se refermer sur eux même au niveau d'une rupture. Ce phénomène s'explique par le traitement de retordage qu'ils ont subi et par leur taux de pénétration par du caoutchouc. Toutefois, il apparaît que si la gêne est moindre, le point de rupture peut créer des décalages de niveau qui dans certains cas occasionnent des problèmes pour l'étape de cardage.

Les documents FR 3 022 843 A1, FR 3 022 841 A1 et FR 3 022 839 A1 décrivent des mélanges pour calandrage de nappe de travail de pneumatiques dont le module d'élasticité sous tension à 10 % d'allongement est inférieur à 8.5 MPa et comportant des charges spécifiques. Par ailleurs, ils décrivent la note Z d'une couche de mélange caoutchouteux constitutive du pneumatique.

Un but de l'invention est ainsi de fournir des pneumatiques pour véhicules "Poids-Lourds", dont les performances d'endurance et d'usure sont conservées, pour des usages routiers quelles que soient les conditions d'usage, lesdits pneumatiques pouvant être rechapés plus sûrement

Ce but est atteint selon l'invention par un pneumatique à armature de carcasse radiale comprenant une armature de sommet formée d'au moins deux couches de sommet de travail d'éléments de renforcement formant un angle avec la direction circonférentielle et d'au moins une couche de protection, d'éléments de renforcement métalliques insérés entre deux couches de calandrage de mélange élastomérique comportant une charge renforçante constituée par au moins du noir de carbone, ladite couche de protection étant radialement extérieure auxdites au moins deux couches de sommet de travail, l'armature de sommet étant coiffée radialement d'une bande de roulement, ladite bande de roulement étant réunie à deux bourrelets par l'intermédiaire de deux flancs, le module d'élasticité sous tension à 10 % d'allongement, mesuré conformément à la norme AFNOR-NFT-46002 de septembre 1988, d'au moins la couche de calandrage radialement la plus extérieure d'au moins une couche de protection étant inférieur à 8,5 MPa et au moins ladite couche de calandrage radialement la plus extérieure d'au moins une couche de protection présente une note Z de macro dispersion, mesurée en accord avec la norme ISO 11345, de macro dispersion, supérieure à 85.

Une note Z de macro dispersion supérieure à 85 d'un mélange élastomérique chargé signifie que la charge est dispersée dans la matrice élastomère de la composition avec une note de dispersion Z supérieure ou égale à 85.

Dans la présente description, la dispersion de charge dans une matrice élastomère est caractérisée par la note Z, qui est mesurée, après réticulation, selon la méthode décrite par S. Otto et A1 dans Kautschuk Gummi Kunststoffe, 58 Jahrgang, NR 7-8/2005, en accord avec la norme ISO 11345.

Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z = 100 - (\%\ \text{surface non dispersée}) / 0.35.$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.

Plus la note Z est haute, meilleure est la dispersion de la charge dans la matrice en caoutchouc (une note Z de 100 correspondant à une dispersion parfaite et une note Z de 0 à une dispersion médiocre). On considèrera qu'une note Z supérieure ou égale à 80 correspond à une surface présentant une très bonne dispersion de la charge dans la matrice élastomère.

Les mélanges élastomériques constituant au moins ladite couche de calandrage radialement la plus extérieure d'au moins une couche de protection sont préparés selon des méthodes connues.

Afin d'atteindre une note Z de macrodispersion supérieure à 85, le mélange élastomérique peut avantageusement être préparé par formation d'un mélange maître d'élastomère diénique et de charge renforçante.

Au sens de l'invention, on entend par « mélange maître » (couramment désigné par son nom anglais « masterbatch »), un composite à base d'élastomère dans lequel a été introduite une charge.

Il existe différentes méthodes pour obtenir un mélange maître d'élastomère diénique et de charge renforçante. En particulier un type de solution consiste, pour améliorer la dispersion de la charge dans la matrice élastomère, à procéder au mélange de l'élastomère et de la charge en phase «liquide». Pour ce faire, on a fait appel à un élastomère sous forme de latex qui se présente sous forme de particules d'élastomère dispersées dans l'eau, et à une dispersion aqueuse de la charge, c'est-à-dire une charge dispersée dans de l'eau, couramment appelée « slurry ».

Ainsi, selon une des variantes de l'invention, le mélange maître est obtenu par mélangeage en phase liquide à partir d'un latex d'élastomère diénique comprenant du caoutchouc naturel et d'une dispersion aqueuse d'une charge comprenant du noir de carbone.

Plus préférentiellement encore le mélange maître selon l'invention est obtenu selon les étapes de procédé suivantes, permettant l'obtention d'une très bonne dispersion de la charge dans la matrice élastomère:

- alimenter avec un premier flux continu d'un latex d'élastomère diénique une zone de mélange d'un réacteur de coagulation définissant une zone allongée de coagulation s'étendant entre la zone de mélange et une sortie,

- alimenter ladite zone de mélange du réacteur de coagulation avec un second flux continu d'un fluide comprenant une charge sous pression pour former un mélange avec le latex d'élastomère en mélangeant le premier fluide et le second fluide dans la zone de mélange de manière suffisamment énergique pour coaguler le latex d'élastomère avec la charge avant la sortie, ledit mélange s'écoulant comme un flux continu vers la zone de sortie et ladite charge étant susceptible de coaguler le latex d'élastomère,

- récupérer à la sortie du réacteur le coagulum obtenu précédemment sous forme d'un flux continu et le sécher afin de récupérer le mélange maître.

Un tel procédé de préparation d'un mélange maître en phase liquide est par exemple décrit dans le document WO 97/36724.

Avantageusement selon l'invention, la liaison élastomère-charge de la première couche S de mélange polymérique est caractérisée par un taux de « bond rubber », mesuré avant réticulation, supérieur à 35%.

Le test dit de "bound rubber" permet de déterminer la proportion d'élastomère, dans une composition non vulcanisée, qui est associée à la charge renforçante si intimement que cette proportion d'élastomère est insoluble dans les solvants organiques usuels. La connaissance de cette proportion insoluble de caoutchouc, fixée par la charge renforçante au cours du mélangeage, donne une indication quantitative de l'activité renforçante de la charge dans la composition de caoutchouc. Une telle méthode a été décrite par exemple dans la norme NF-T-45-114 (juin 1989) appliquée à la détermination du taux d'élastomère lié au noir de carbone.

Ce test, bien connu de l'homme du métier pour caractériser la qualité de renforcement apportée par la charge renforçante, a par exemple été décrit dans les documents suivants: Plastics, Rubber and Composites Processing and Applications, Vol. 25, No7, p. 327 (1996) ; Rubber Chemistry and Technology, Vol. 69, p. 325 (1996).

Dans le cas présent, on mesure le taux d'élastomère non extractible au toluène, après un gonflement pendant 15 jours d'un échantillon de composition de caoutchouc (typiquement 300-350 mg) dans ce solvant (par exemple dans 80-100 cm3 de toluène), suivi d'une étape de séchage de 24 heures à 100°C, sous vide, avant pesée de l'échantillon de composition de caoutchouc ainsi traité. De préférence, l'étape de gonflement ci-dessus est conduite à la température ambiante (environ 20°C) et à l'abri de la lumière, et le solvant (toluène) est changé une fois, par exemple après les cinq premiers jours de gonflement. Le taux de "bound rubber" (% en poids) est calculé de manière connue par différence entre le poids initial et le poids final de l'échantillon de composition de caoutchouc, après prise en compte et élimination, dans le calcul, de la fraction des composants insolubles par nature, autres que l'élastomère, présents initialement dans la composition de caoutchouc.

Les essais réalisés ont montré que l'utilisation des mélanges élastomériques selon l'invention comportant une charge renforçante constituée par au moins du noir de carbone, présentant un module d'élasticité sous tension à 10 % d'allongement inférieur à 8,5 MPa et une note Z de macro dispersion supérieure à 85, pour réaliser la couche de calandrage radialement la plus extérieure d'au moins une couche de protection permet d'améliorer les propriétés du pneumatique en termes d'endurance.

Les inventeurs pensent avoir notamment mis en évidence que le choix de mélanges selon l'invention pour réaliser au moins la couche de calandrage radialement la plus extérieure d'une couche de protection qui conduisent notamment à une couche de calandrage faiblement conductrice d'un point de vue électrique, en comparaison de mélanges plus usuels, limite les phénomènes de corrosion des éléments de renforcement de la couche de protection.

Selon un mode de réalisation préféré de l'invention, au moins ladite couche de calandrage radialement la plus extérieure d'au moins une couche de protection présentant une résistivité électrique volumique p telle que log(p) est supérieur à 8.

La résistivité électrique volumique p est mesurée en statique selon la norme ASTM D 257, p étant exprimé en ohm.cm.

Selon un mode de réalisation préféré de l'invention, au moins ladite couche de calandrage radialement la plus extérieure d'au moins une couche de protection est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

a) soit par du noir de carbone employé à un taux compris entre 20 et 80 pce,

b) soit par un coupage de noir de carbone et une charge blanche, dans lequel le taux global de charge est compris entre 20 et 80 pce, et de préférence entre 40 et 60 pce, ladite charge blanche étant de type silice et/ou alumine, comportant des fonctions de surface SiOH et/ou AlOH choisie dans le groupe formé par les silices précipitées ou pyrogénées, les alumines ou les aluminosilicates, ou bien encore les noirs de carbone modifiés en cours ou après la synthèse, de surface spécifique BET, mesurée conformément à la norme NFT 45007 de novembre 1987, comprise entre 30 et 260 $m^2$/g.

La mesure de surface spécifique BET est effectuée selon la méthode de BRUNAUER, EMMET et TELLER décrite dans "The Journal of the American Chemical Society», vol. 60, page 309, février 1938, correspondant à la norme NFT 45007 de novembre 1987.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge ≥ à 1/100 et ≤ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854. Comme autres exemples non limitatifs, on peut citer les charges commercialisées par la société Cabot Corporation sous la dénomination EcoblackTM « CRX 2000 » ou « CRX4000 », ou bien encore les charges décrites dans les publications US2003040553, WO9813428 ; Une telle charge renforçante contient préférentiellement un taux de silice de 10% en masse de la charge renforçante.

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Avantageusement selon une variante de réalisation de l'invention, les éléments de renforcement métalliques d'au moins ladite couche de protection sont des câbles présentant au test dit de perméabilité un débit inférieur à 5 $cm^3$/mn.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 $cm^3$/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de $\pm$ 0,2 $cm^3$/min, les valeurs mesurées inférieures ou égales à 0,2 $cm^3$/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Des câbles présentant au test dit de perméabilité un débit inférieur à 2 cm3/mn présentent un taux de pénétration supérieure à 90%.

Avantageusement selon cette variante de l'invention, la valeur au test dit de perméabilité des mélanges pour réaliser au moins la couche de calandrage radialement la plus extérieure d'une couche de protection peut être obtenue par une fluidité supérieure à celles des mélanges plus usuels.

De telles valeurs au test dit de perméabilité semblent encore améliorer l'endurance des pneumatiques notamment lors d'agressions particulièrement sévères des pneumatiques conduisant à un accès pour les agents oxydants aux éléments de renforcement de la couche de protection. En effet, une plus grande pénétration des éléments de renforcement métalliques de la couche de protection par les mélanges de calandrage est bénéfique à une moindre propagation des agents oxydants au sein des éléments de renforcement. Dans le cas d'agression pouvant libérer l'accès pour les agents oxydants aux éléments de renforcement, une telle pénétration des éléments de renforcement limite les contacts directs entre les agents oxydants et les éléments de renforcement métalliques. L'oxydation des éléments de renforcement continue alors à se faire essentiellement du fait du passage des agents oxydants jusqu'à la couche de calandrage, l'intensité de l'oxydation étant diminuée par le choix des mélanges constituant le calandrage radialement extérieur de la couche de protection qui présentent une faible conductivité électrique.

Avantageusement selon l'invention, l'armature de sommet comportant une unique couche de protection, les éléments de renforcement métalliques de ladite au moins une couche de protection sont orientés par rapport à la direction circonférentielle avec un angle compris entre 10° et 45° et de même sens que l'angle formé par les éléments de renforcement de la couche de travail qui lui est radialement adjacente.

Avantageusement encore selon l'invention, les éléments de renforcement métalliques de ladite au moins une couche de protection sont élastiques.

Selon l'invention, une couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large.

Selon un mode de réalisation préféré de l'invention, la valeur maximale de tan(δ), noté tan(δ)max, d'au moins ladite couche de calandrage radialement la plus extérieure d'au moins une couche de protection est inférieure à 0.080 et de préférence inférieure à 0.070.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 2 mm d'épaisseur et de 78 $mm^2$ de section), soumis à une sollicitation sinusoïdale en cisaillement simple alterné, à la fréquence de 10Hz, à une température de 100°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan(δ) mesuré sur le cycle retour. Pour le cycle retour, on indique la valeur maximale de tan(δ) observée, noté $\tan(\delta)_{max}$.

La résistance au roulement est la résistance qui apparaît lorsque le pneumatique roule. Elle est représentée par les pertes hystérétiques liées à la déformation du pneumatique durant une révolution. Les valeurs de fréquence liées à la révolution du pneumatique correspondent à des valeurs de tan(δ) mesurée entre 30 et 100°C. La valeur de tan(δ) à 100 °C correspond ainsi à un indicateur de la résistance au roulement du pneumatique en roulage.

Les inventeurs ont encore su mettre en évidence que le choix de mélanges selon ce mode de réalisation préféré de l'invention pour réaliser au moins la couche de calandrage radialement la plus extérieure d'une couche de protection permet d'améliorer les propriétés du pneumatique en matière de résistance au roulement, du fait de la valeur relativement faible de la valeur maximale de tan(δ), noté tan(δ)max.

Selon un mode de réalisation préféré de l'invention, notamment pour contribuer plus encore aux performances du pneumatique en termes de résistance au roulement, le module d'élasticité sous tension à 10 % d'allongement des deux couches de calandrage d'une couche de protection est inférieur à 8,5 MPa, et la valeur maximale de tan(δ), noté tan(δ)max, des deux couches de calandrage d'une couche de protection est inférieure à 0.080 et de préférence inférieure à 0.070.

De préférence encore, les deux couches de calandrage d'une couche de protection sont constituées d'un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

a) soit par du noir de carbone employé à un taux compris entre 20 et 80 pce,

b) soit par un coupage de noir de carbone et une charge blanche, dans lequel le taux global de charge est compris entre 20 et 80 pce, et de préférence entre 40 et 60 pce, ladite charge blanche étant de type silice et/ou alumine, comportant des fonctions de surface SiOH et/ou AlOH choisie dans le groupe formé par les silices précipitées ou pyrogénées, les alumines ou les aluminosilicates, ou bien encore les noirs de carbone modifiés en cours ou après la synthèse, de surface spécifique BET comprise entre 30 et 260 $m^2/g$.

Selon une variante de réalisation de l'invention, l'armature de sommet comporte au moins une couche d'éléments de renforcement circonférentiels.

Selon cette variante de l'invention et selon une réalisation avantageuse de l'invention notamment pour améliorer encore les performances du pneumatique en termes de résistance au roulement, le module d'élasticité sous tension à 10 % d'allongement d'au moins une couche de calandrage d'au moins une couche de sommet de travail est inférieur à 8,5 MPa et la valeur $\tan(\delta)_{max}$ d'au moins une couche de calandrage d'au moins une couche de sommet de travail est inférieure à 0.100.

Selon un mode préféré de réalisation de l'invention, le module d'élasticité sous tension à 10 % d'allongement des couches de calandrage desdites au moins deux couches de sommet de travail est inférieur à 8,5 MPa et la valeur

$\tan(\delta)_{max}$ des couches de calandrage desdites au moins deux couches de sommet de travail est inférieure à 0.100.

Les essais réalisés ont montré que l'utilisation de tels mélanges dont les modules d'élasticité sont inférieurs à 8.5 MPa et dont la valeur $\tan(\delta)_{max}$ est inférieure à 0.100 permet d'améliorer les propriétés du pneumatique en matière de résistance au roulement en conservant des propriétés d'endurance satisfaisante.

Habituellement, les modules d'élasticité sous tension à 10 % d'allongement des calandrages des couches de sommet de travail sont supérieurs à 8.5 MPa et le plus souvent supérieurs à 10 MPa. De tels modules d'élasticité sont notamment requis pour permettre de limiter les mises en compression des éléments de renforcement des couches de sommet de travail notamment lorsque le véhicule suit un parcours sinueux, lors de manœuvres sur les parkings ou bien lors du passage de ronds-points. En effet, les cisaillements selon la direction axiale qui s'opèrent sur la bande de roulement dans la zone de la surface de contact avec le sol conduisent à la mise en compression des éléments de renforcement d'une couche de sommet de travail.

Les inventeurs ont su mettre en évidence que la couche d'élément de renforcement circonférentiels autorise des choix de modules d'élasticité des mélanges caoutchouteux des couches de calandrages des couches de sommet de travail plus faibles sans nuire aux propriétés d'endurance du pneumatique du fait des mises en compression des éléments de renforcement desdites couches de sommet de travail telles que décrites précédemment.

Les inventeurs ont encore su mettre en évidence que la cohésion des couches de calandrages des couches de sommet de travail, lorsqu'elles présentent un module d'élasticité sous tension à 10 % d'allongement inférieur à 8.5 MPa, reste satisfaisante.

Au sens de l'invention, un mélange caoutchouteux cohésif est un mélange caoutchouteux notamment robuste à la fissuration. La cohésion d'un mélange est ainsi évaluée par un test de fissuration en fatigue réalisé sur une éprouvette « PS » (pure shear). Il consiste à déterminer, après entaillage de l'éprouvette, la vitesse de propagation de fissure « Vp » (nm/cycle) en fonction du taux de restitution d'énergie « E » ($J/m^2$). Le domaine expérimental couvert par la mesure est compris dans la plage -20°C et +150°C en température, avec une atmosphère d'air ou d'azote. La sollicitation de l'éprouvette est un déplacement dynamique imposé d'amplitude comprise entre 0.1mm et 10mm sous forme de sollicitation de type impulsionnel (signal « haversine » tangent) avec un temps de repos égal à la durée de l'impulsion ; la fréquence du signal est de l'ordre de 10Hz en moyenne.

La mesure comprend 3 parties :

- Une accommodation de l'éprouvette « PS », de 1000 cycles à 27% de déformation.
- une caractérisation énergétique pour déterminer la loi « E » = f (déformation). Le taux de restitution d'énergie « E » est égal à W0*h0, avec W0 = énergie fournie au matériau par cycle et par unité de volume et h0 = hauteur initiale de l'éprouvette. L'exploitation des acquisitions « force / déplacement » donne ainsi la relation entre « E » et l'amplitude de la sollicitation.
- La mesure de fissuration, après entaillage de l'éprouvette « PS ». Les informations recueillies conduisent à déterminer la vitesse de propagation de la fissure « Vp » en fonction du niveau de sollicitation imposé « E ».

Les inventeurs ont notamment mis en évidence que la présence d'au moins une couche d'éléments de renforcement circonférentiels contribue à une moindre évolution de la cohésion des couches de calandrages des couches de sommet de travail. En effet, les conceptions de pneumatiques plus usuelles comportant notamment des couches de calandrages des couches de sommet de travail avec des modules d'élasticité sous tension à 10 % d'allongement supérieurs à 8.5 MPa, conduisent à une évolution de la cohésion desdites couches de calandrages des couches de sommet de travail, celle-ci tendant à s'affaiblir. Les inventeurs constatent que la présence d'au moins une couche d'éléments de renforcement circonférentiels qui contribue à limiter les mises en compression des éléments de renforcement des couches de sommet de travail notamment lorsque le véhicule suit un parcours sinueux et en outre, limite les augmentations de température conduit à une faible évolution de la cohésion des couches de calandrages. Les inventeurs considèrent ainsi que la cohésion des couches de calandrages des couches de sommet de travail, plus faible que ce qui existe dans les conceptions de pneumatiques plus usuelles, est satisfaisante dans la conception du pneumatique selon l'invention.

Selon un mode de réalisation préféré de l'invention, ladite au moins une couche de calandrage d'au moins une couche de sommet de travail est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

a) soit par du noir de carbone de surface spécifique BET supérieure à 60 $m^2/g$,

i. employé à un taux compris entre 20 et 40 pce lorsque l'indice de structure du noir (COAN) est supérieur à 85,

ii. employé à un taux compris entre 20 et 60 pce lorsque l'indice de structure du noir (COAN) est inférieur à 85,

b) soit par du noir de carbone de surface spécifique BET inférieure à 60 $m^2/g$, quelle que soit son indice de structure, employé à un taux compris entre 20 et 80 pce, et de préférence entre 30 et 50 pce,

c) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 130 et 260 $m^2/g$, et de préférence supérieure à 150 $m^2/g$, employée à un taux compris entre 20 et 80 pce, et de préférence entre 30 et 50 pce,

d) soit par un coupage de noir de carbone décrit en (a) et/ou de noir de carbone décrit en (b) et/ou une charge blanche décrite en (c), dans lequel le taux global de charge est compris entre 20 et 80 pce, et de préférence entre 40 et 60 pce.

La mesure de surface spécifique BET est effectuée selon la méthode de BRUNAUER, EMMET et TELLER décrite dans "The Journal of the American Chemical Society", vol. 60, page 309, février 1938, correspondant à la norme NFT 45007 de novembre 1987.

L'indice de structure du noir COAN (Compressed Oil Absorption Number) est mesuré selon la norme ASTM D3493.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge $\geq$ à 1/100 et $\leq$ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854. Comme autres exemples non limitatifs, on peut citer les charges commercialisées par la société Cabot Corporation sous la dénomination EcoblackTM « CRX 2000 » ou « CRX4000 », ou bien encore les charges décrites dans les publications US2003040553, WO9813428 ; Une telle charge renforçante contient préférentiellement un taux de silice de 10% en masse de la charge renforçante.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique BET comprise entre 30 et 260 $m^2/g$. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Selon ce mode de réalisation préféré de l'invention, un module d'élasticité plus faible s'accompagne généralement d'un module visqueux G" plus faible, cette évolution s'avérant favorable à une réduction de la résistance au roulement du pneumatique.

Selon un mode de réalisation avantageux de l'invention, la couche de sommet de travail axialement la plus large est radialement à l'intérieur des autres couches de sommet de travail.

Selon une variante avantageuse de réalisation de l'invention, la couche d'éléments de renforcement circonférentiels présente une largeur axiale supérieure à 0.5xW.

W est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préférée de l'invention, une couche d'éléments de renforcement circonférentiels est radialement disposée entre deux couches de sommet de travail.

Selon ce mode de réalisation de l'invention, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par une couche C de mélange de caoutchouc au moins sur le restant de la largeur commune aux dites deux couches de travail.

La présence de tels couplages entre les couches de sommet de travail adjacentes à la couche d'éléments de renforcement circonférentiels permet la diminution des contraintes de tension agissant sur les éléments circonférentiels axialement le plus à l'extérieur et situé le plus près du couplage.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport $a/\lambda$ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Les éléments métalliques sont préférentiellement des câbles d'acier.

Selon un mode de réalisation préféré de l'invention, les éléments de renforcement des couches de sommet de travail sont des câbles métalliques inextensibles.

Avantageusement selon l'invention, l'armature de sommet est formée d'au moins deux couches de sommet de travail d'éléments de renforcement, croisés d'une couche à l'autre en faisant avec la direction circonférentielle des angles compris entre 10° et 45°.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Selon une autre variante avantageuse de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence à la figure qui représente une vue méridienne d'un schéma d'un pneumatique selon un mode de réalisation de l'invention.

La figure n'est pas représentée à l'échelle pour en simplifier la compréhension. La figure ne représente qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 315/70 R 22.5, a un rapport de forme H/S égal à 0, 70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :

- d'une première couche de travail 41 formée de câbles métalliques inextensibles 9.28 non frettés, continus sur toute la largeur de la nappe, orientés d'un angle égal à 24°,
- d'une seconde couche de travail 42 formée de câbles métalliques inextensibles 9.28 non frettés, continus sur toute la largeur de la nappe, orientés d'un angle égal à 24° et croisés avec les câbles métalliques de la couche 41,
- d'une couche de protection 43 formées de câbles métalliques élastiques 18.23.

L'armature de sommet est elle-même coiffée d'une bande de roulement 6.

La largeur axiale maximale W du pneumatique est égale à 317 mm.

La largeur axiale $L_{41}$ de la première couche de travail 41 est égale à 252 mm.

La largeur axiale $L_{42}$ de la deuxième couche de travail 42 est égale à 232 mm.

La dernière nappe de sommet 43, dite de protection, a une largeur $L_{43}$ égale à 124 mm.

Conformément à l'invention, le module d'élasticité sous tension à 10 % d'allongement des couches de calandrage de la couche de protection 43 est inférieur à 8.5 MPa et la note Z de macro dispersion supérieure à 85.

La valeur de Log (p) qui exprime la résistivité électrique des couches de calandrage de la couche de protection 43 est supérieure à 8 Ohm.cm.

La valeur maximale de tan(δ), noté tan(δ)max, des couches de calandrage de la couche de protection 43 est inférieure à 0.070.

Des essais ont été réalisés avec différents pneumatiques réalisés selon l'invention et comparés avec des pneumatiques de référence.

Des essais sont réalisés en faisant varier les caractéristiques des mélanges de calandrages de la couche de protection 43, notamment leur module d'élasticité sous tension à 10 % d'allongement et la note Z.

Les différents mélanges utilisés sont listés ci-après.

| | Mélange R1 | Mélange R2 | Mélange 1 | Mélange 2 |
|---|---|---|---|---|
| NR | 100 | 100 | 100 | 100 |
| Noir N347 | 52 | | 50 | |
| Noir N326 | | 47 | | |

(suite)

| | Mélange R1 | Mélange R2 | Mélange 1 | Mélange 2 |
|---|---|---|---|---|
| Noir N234 | | | | 40 |
| Antioxydant (6PPD) | 1 | 1.5 | 1 | 1 |
| Acide stéarique | 0.65 | 0.9 | 0.65 | 0.65 |
| Oxyde de zinc | 9.3 | 7.5 | 9.3 | 9.3 |
| Sel de Cobalt (AcacCo) | 1.12 | 1.12 | 1.12 | 1.12 |
| soufre | 6.1 | 4.5 | 6.1 | 6.1 |
| Accélérateur DCB S | 0.93 | 0.8 | 0.93 | 0.93 |
| Retardateur CTP PVI) | 0.25 | 0.15 | 0.25 | 0.25 |
| $MA_{10}$ (MPa) | 10.4 | 5.99 | 6.4 | 5.3 |
| $\tan(\delta)_{max}$ | 0.130 | 0.099 | 0.069 | 0.060 |
| Résisitivité (logrho) | 4 | 6 | 9 | > 10 |
| Note Z | 77 | 80 | 92 | 89 |

Les pneumatiques I selon l'invention avec une couche de protection dont les calandrages sont constitués des mélanges choisi parmi les mélanges 1 à 3.

Des pneumatiques de référence T sont réalisés avec une couche de protection dont les calandrages sont constitués du mélange R1 ou du mélange R2.

Le Log(p) exprime la résistivité électrique volumique des couches de calandrage de la couche de protection 43, p étant exprimé en ohm.cm.

Des essais correspondant à des essais d'endurance ont été réalisés par roulage avec des véhicules circulant sur une surface de roulement constituée de cailloux agressifs qui viennent se coincer dans les zones en creux de la sculpture de la bande de roulement des pneumatiques. Les véhicules passent ensuite dans un bac de solution saline pour permettre au liquide corrosif de se propager au sein du pneumatique via les fissures formées du fait des agressions causées par les cailloux.

Après un roulage suffisant conduisant à une dégradation prononcée de la couche de protection des pneumatiques de référence T, les éléments de renforcement de la couche de protection sont analysées. Les mesures effectuées correspondent à des longueurs d'éléments de renforcement corrodées et des nombres de ruptures desdits éléments de renforcement.

Des mesures identiques sont effectuées sur les pneumatiques I réalisés selon l'invention après un kilométrage parcouru identique à celui des pneumatiques T dans les mêmes conditions.

Les résultats sont exprimés dans le tableau qui suit en référence à une base 100 fixé pour les pneumatiques de référence T. On fixe une base 100 d'une part pour les longueurs d'éléments de renforcement corrodées et une autre base 100 pour le dénombrement de ruptures d'éléments de renforcement.

| | Pneumatique T | Pneumatique I |
|---|---|---|
| Longueur corrodée | 100 | 80 |
| Nombre de ruptures | 100 | 70 |

Ces essais montrent notamment que la conception des pneumatiques selon l'invention permet de retarder la corrosion des éléments de renforcement de la couche de protection et est donc favorable aux performances en termes d'endurance des pneumatiques.

Par ailleurs, des mesures de résistance au roulement ont été effectuées. Ces mesures ont porté sur le pneumatique de référence T, le mélange R2 étant utilisé pour les couches de calandrages de la couche de protection, et sur des pneumatiques selon l'invention I tel que décrit précédemment, le mélange 2 étant utilisé pour les couches de calandrages de la couche de protection.

Les résultats des mesures sont présentés dans le tableau suivant ; elles sont exprimées en Kg/t, une valeur de 100 étant attribuée au pneumatique T.

| Pneumatique T | Pneumatique I |
|---|---|
| 100 | 99 |

## Revendications

1. Pneumatique à armature de carcasse radiale comprenant une armature de sommet formée d'au moins deux couches de sommet de travail d'éléments de renforcement formant un angle avec la direction circonférentielle et d'au moins une couche de protection, d'éléments de renforcement métalliques insérés entre deux couches de calandrage de mélange élastomérique comportant une charge renforçante constituée par au moins du noir de carbone, ladite couche de protection étant radialement extérieure auxdites au moins deux couches de sommet de travail, l'armature de sommet étant coiffée radialement d'une bande de roulement, ladite bande de roulement étant réunie à deux bourrelets par l'intermédiaire de deux flancs, **caractérisé en ce que** le module d'élasticité sous tension à 10 % d'allongement, mesuré conformément à la norme AFNOR-NFT-46002 de septembre 1988, d'au moins la couche de calandrage radialement la plus extérieure d'au moins une couche de protection est inférieur à 8,5 MPa et **en ce qu'**au moins ladite couche de calandrage radialement la plus extérieure d'au moins une couche de protection présente une note Z, mesurée en accord avec la norme ISO 11345, de macro dispersion, supérieure à 85.

2. Pneumatique selon la revendication 1, **caractérisé en ce qu'**au moins ladite couche de calandrage radialement la plus extérieure d'au moins une couche de protection est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

   a) soit par du noir de carbone employé à un taux compris entre 20 et 80 pce,
   b) soit par un coupage de noir de carbone et une charge blanche, dans lequel le taux global de charge est compris entre 20 et 80 pce, et de préférence entre 40 et 60 pce, ladite charge blanche étant de type silice et/ou alumine, comportant des fonctions de surface SiOH et/ou AlOH choisie dans le groupe formé par les silices précipitées ou pyrogénées, les alumines ou les aluminosilicates, ou bien encore les noirs de carbone modifiés en cours ou après la synthèse, de surface spécifique BET, mesurée conformément à la norme NFT 45007 de novembre 1987, comprise entre 30 et 260 $m^2/g$.

3. Pneumatique selon l'une des revendications 1 ou 2, **caractérisé en ce qu'**au moins ladite couche de calandrage radialement la plus extérieure d'au moins une couche de protection présentant une résistivité électrique volumique p telle que log(p) est supérieur à 8.

4. Pneumatique selon l'une des revendications 1 à 3, **caractérisé en ce que** les éléments de renforcement métalliques d'au moins ladite couche de protection sont des câbles présentant au test dit de perméabilité un débit inférieur à 5 $cm^3/mn$.

5. Pneumatique selon l'une des revendications 1 à 4, **caractérisé en ce que** les éléments de renforcement de ladite couche de protection sont orientés par rapport à la direction circonférentielle avec un angle de même sens que l'angle formé par les éléments de renforcement de la couche de sommet de travail qui lui est radialement adjacente.

6. Pneumatique selon l'une des revendications précédentes, **caractérisé en ce que** la valeur maximale de $\tan(\delta)$, noté $\tan(\delta)_{max}$, d'au moins ladite couche de calandrage radialement la plus extérieure d'au moins une couche de protection est inférieure à 0.080.

7. Pneumatique selon l'une des revendications précédentes, **caractérisé en ce que** l'armature de sommet comporte au moins une couche d'éléments de renforcement circonférentiels.

8. Pneumatique selon la revendication 7, **caractérisé en ce que** la couche d'éléments de renforcement circonférentiels est radialement disposée entre deux couches de sommet de travail.

9. Pneumatique selon l'une des revendications 7 ou 8, lesdites au moins deux couches de sommet de travail étant formées d'éléments de renforcement insérés entre deux couches de calandrage de mélange caoutchouteux, **ca-**

**ractérisé en ce que** le module d'élasticité sous tension à 10 % d'allongement d'au moins une couche de calandrage d'au moins une couche de sommet de travail est inférieur à 8,5 MPa, **en ce que** la valeur maximale de tan(δ), noté tan(δ)max, de ladite au moins une couche de calandrage d'au moins une couche de sommet de travail est inférieure à 0.100.

**10.** Pneumatique selon la revendication 9, **caractérisé en ce que** ladite au moins une couche de calandrage d'au moins une couche de sommet de travail est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

a) soit par du noir de carbone de surface spécifique BETsupérieure à 60 $m^2$/g,

i. employé à un taux compris entre 20 et 40 pce lorsque l'indice de structure du noir (COAN) est supérieur à 85,
ii. employé à un taux compris entre 20 et 60 pce lorsque l'indice de structure du noir (COAN) est inférieur à 85,

b) soit par du noir de carbone de surface spécifique BET inférieure à 60 $m^2$/g, quelle que soit son indice de structure, employé à un taux compris entre 20 et 80 pce, et de préférence entre 30 et 50 pce,
c) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 130 et 260 $m^2$/g, et de préférence supérieure à 150 $m^2$/g, employée à un taux compris entre 20 et 80 pce, et de préférence entre 30 et 50 pce,
d) soit par un coupage de noir de carbone décrit en (a) et/ou de noir de carbone décrit en (b) et/ou une charge blanche décrite en (c), dans lequel le taux global de charge est compris entre 20 et 80 pce, et de préférence entre 40 et 60 pce.

**11.** Pneumatique selon l'une des revendications précédentes, **caractérisé en ce que** lesdites au moins deux couches de sommet de travail sont constituées d'éléments de renforcement, de préférence inextensibles, croisés d'une couche à l'autre en faisant avec la direction circonférentielle des angles compris entre 10° et 45°.

**12.** Pneumatique selon l'une des revendications précédentes, **caractérisé en ce que** les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

**13.** Pneumatique selon l'une des revendications précédentes, **caractérisé en ce que** l'armature de sommet comporte en outre une couche de triangulation formée d'éléments de renforcement métalliques faisant avec la direction circonférentielle des angles supérieurs à 45°.

**Patentansprüche**

**1.** Reifen mit radialer Karkassenarmierung umfassend eine Scheitelarmierung, die von mindestens zwei Arbeitsscheitelschichten aus Verstärkungselementen, die einen Winkel mit der Umfangsrichtung bilden, gebildet ist, und von mindestens einer Schutzschicht aus metallischen Verstärkungselementen, die zwischen zwei Kalandrierschichten aus einer Elastomermischung aufweisend einen verstärkenden Füllstoff, der zumindest von Ruß gebildet ist, eingefügt ist, wobei die Schutzschicht radial außerhalb der mindestens zwei Arbeitsscheitelschichten gelegen ist, wobei die Scheitelarmierung radial von einem Laufstreifen bedeckt ist, wobei der Laufstreifen über zwei Flanken mit zwei Wülsten verbunden ist, **dadurch gekennzeichnet, dass** der Elastizitätsmodul unter Spannung bei 10 % Dehnung zumindest der radial am weitesten außen gelegenen Kalandrierschicht mindestens einer Schutzschicht, gemessen nach der Norm AFNOR-NFT-46002 vom September 1988, kleiner als 8,5 MPa ist und dadurch, dass zumindest die radial am weitesten außen gelegene Kalandrierschicht mindestens einer Schutzschicht einen Z-Wert der Makrodispersion aufweist, der gemäß der Norm ISO 11345 gemessen wird, der über 85 liegt.

**2.** Reifen nach Anspruch 1, **dadurch gekennzeichnet, dass** zumindest die radial am weitesten außen gelegene Kalandrierschicht mindestens einer Schutzschicht eine Elastomermischung auf Basis von Naturkautschuk oder synthetischem Polyisopren mit einer Mehrheit von cis-1,4-Ketten und eventuell mindestens einem anderen Dienelastomer ist, wobei der Naturkautschuk oder das synthetische Polyisopren im Falle eines Verschnitts in einem Mehrheitsanteil im Verhältnis zum Anteil des anderen oder der anderen genutzten Dienelastomere vorhanden ist, und von einem verstärkenden Füllstoff, der von Folgendem gebildet ist:

a) entweder von Ruß, der zu einem Anteil zwischen 20 und 80 pce eingesetzt wird,
b) oder von einem Verschnitt aus Ruß und einem weißen Füllstoff, wobei der Gesamt-Füllstoffanteil zwischen 20 und 80 pce und vorzugsweise zwischen 40 und 60 pce liegt, wobei der weiße Füllstoff vom Typ Kieselsäure und/oder Tonerde ist, aufweisend SiOH- und/oder AlOH-Oberflächenfunktionen, der aus der Gruppe gewählt ist, die von gefällten oder pyrogenen Kieselsäuren, Tonerden oder Aluminosilicaten oder auch Rußen gebildet ist, die bei oder nach der Synthese modifiziert wurden, mit einer spezifischen BET-Oberfläche, die gemäß der Norm NFT 45007 vom November 1987 gemessen wird, die zwischen 30 und 260 $m^2/g$ liegt.

3. Reifen nach einem der Ansprüche 1 oder 2, **dadurch gekennzeichnet, dass** zumindest die radial am weitesten außen gelegene Kalandrierschicht mindestens einer Schutzschicht einen spezifischen elektrischen Volumenwiderstand p aufweist, so dass log(p) größer als 8 ist.

4. Reifen nach einem der Ansprüche 1 bis 3, **dadurch gekennzeichnet, dass** die metallischen Verstärkungselemente zumindest der Schutzschicht Seile sind, die bei der Durchlässigkeitsprüfung einen Durchsatz unter 5 $cm^3/mn$ aufweisen.

5. Reifen nach einem der Ansprüche 1 bis 4, **dadurch gekennzeichnet, dass** die Verstärkungselemente der Schutzschicht bezogen auf die Umfangsrichtung mit einem Winkel derselben Richtung wie der Winkel, der von den Verstärkungselementen der Arbeitsscheitelschicht gebildet ist, die ihr radial benachbart ist, ausgerichtet sind.

6. Reifen nach einem der vorhergehenden Ansprüche, **dadurch gekennzeichnet, dass** der Maximalwert von $\tan(\delta)$, der mit $\tan(\delta)$max angegeben ist, zumindest der radial am weitesten außen gelegenen Kalandrierschicht mindestens einer Schutzschicht kleiner als 0,080 ist.

7. Reifen nach einem der vorhergehenden Ansprüche, **dadurch gekennzeichnet, dass** die Scheitelarmierung mindestens eine Schicht aus Umfangsverstärkungselementen aufweist.

8. Reifen nach Anspruch 7, **dadurch gekennzeichnet, dass** die Schicht aus Umfangsverstärkungselementen radial zwischen zwei Arbeitsscheitelschichten angeordnet ist.

9. Reifen nach einem der Ansprüche 7 oder 8, wobei die mindestens zwei Arbeitsscheitelschichten von Verstärkungselementen gebildet sind, die zwischen zwei Kalandrierschichten aus Gummimasse eingefügt sind, **dadurch gekennzeichnet, dass** der Elastizitätsmodul unter Spannung bei 10 % Dehnung mindestens einer Kalandrierschicht mindestens einer Arbeitsscheitelschicht kleiner als 8,5 MPa ist, dadurch, dass der Maximalwert $\tan(\delta)$, der mit $\tan(\delta)$max angegeben ist, der mindestens einen Kalandrierschicht mindestens einer Arbeitsscheitelschicht kleiner als 0,100 ist.

10. Reifen nach Anspruch 9, **dadurch gekennzeichnet, dass** die mindestens eine Kalandrierschicht mindestens einer Arbeitsscheitelschicht eine Elastomermischung auf Basis von Naturkautschuk oder synthetischem Polyisopren mit einer Mehrheit von cis-1,4-Ketten und eventuell mindestens einem anderen Dienelastomer ist, wobei der Naturkautschuk oder das synthetische Polyisopren im Falle eines Verschnitts in einem Mehrheitsanteil im Verhältnis zum Anteil des anderen oder der anderen genutzten Dienelastomere vorhanden ist, und von einem verstärkenden Füllstoff, der von Folgendem gebildet ist:

a) entweder von Ruß mit einer spezifischen BET-Oberfläche größer als 60 $m^2/g$,

i. der zu einem Anteil zwischen 20 und 40 pce eingesetzt wird, wenn der Strukturindex des Rußes (COAN) größer als 85 ist,
ii. der zu einem Anteil zwischen 20 und 60 pce eingesetzt wird, wenn der Strukturindex des Rußes (COAN) kleiner als 85 ist,

b) oder von Ruß mit einer spezifischen BET-Oberfläche kleiner als 60 $m^2/g$ unabhängig von dessen Strukturindex, der zu einem Anteil zwischen 20 und 80 pce und vorzugsweise zwischen 30 und 50 pce eingesetzt wird,
c) oder von einem weißen Füllstoff vom Typ Kieselsäure und/oder Tonerde, aufweisend SiOH- und/oder AlOH-Oberflächenfunktionen, der aus der Gruppe gewählt ist, die von gefällten oder pyrogenen Kieselsäuren, Tonerden oder Aluminosilicaten oder auch Rußen gebildet ist, die bei oder nach der Synthese modifiziert wurden, mit einer spezifischen BET-Oberfläche zwischen 130 et 260 $m^2$/g und vorzugsweise größer als 150 $m^2$/g, der zu einem Anteil zwischen 20 und 80 pce und vorzugsweise zwischen 30 und 50 pce eingesetzt wird,
d) oder von einem Verschnitt aus Ruß, der in (a) beschrieben ist, und/oder Ruß, der in (b) beschrieben ist, und/oder einem weißen Füllstoff, der in (c) beschrieben ist, wobei der Gesamt-Füllstoffanteil zwischen 20 und 80 pce und vorzugsweise zwischen 40 und 60 pce liegt.

**11.** Reifen nach einem der vorhergehenden Ansprüche, **dadurch gekennzeichnet, dass** die mindestens zwei Scheitel-Arbeitsschichten von Verstärkungselementen gebildet ist, vorzugsweise nicht dehnbaren, die durch Bilden von Winkeln zwischen 10° und 45° mit der Umfangsrichtung von einer Schicht zur anderen gekreuzt sind.

**12.** Reifen nach einem der vorhergehenden Ansprüche, **dadurch gekennzeichnet, dass** die Verstärkungselemente mindestens einer Schicht aus Umfangsverstärkungselementen metallische Verstärkungselemente sind, die einen Sekantenmodul bei 0,7 % Dehnung zwischen 10 und 120 GPa und einen maximalen Tangentenmodul kleiner als 150 GPa aufweisen.

**13.** Reifen nach einem der vorhergehenden Ansprüche, **dadurch gekennzeichnet, dass** die Scheitelarmierung ferner eine Triangulationsschicht aufweist, die von metallischen Verstärkungselementen gebildet ist, die mit der Umfangsrichtung Winkel größer als 45° bilden.

## Claims

**1.** Tyre having a radial carcass reinforcement comprising a crown reinforcement formed of at least two working crown layers of reinforcing elements forming an angle with the circumferential direction and of at least one protective layer of metal reinforcing elements inserted between two calendering layers of elastomer compound comprising a reinforcing filler consisting of at least carbon black, said protective layer being radially outside said at least two working crown layers, the crown reinforcement being capped radially by a tread, said tread being connected to two beads via two sidewalls, **characterized in that** the tensile elastic modulus at 10% elongation, measured in accordance with standard AFNOR-NFT-46002 of September 1988, of at least the radially outermost calendering layer of at least one protective layer is less than 8.5 MPa and **in that** at least said radially outermost calendering layer of at least one protective layer has a macro dispersion coefficient Z, measured in accordance with standard ISO 11345, of greater than 85.

**2.** Tyre according to Claim 1, **characterized in that** at least said radially outermost calendering layer of at least one protective layer is an elastomer compound based on natural rubber or on synthetic polyisoprene with a predominance of cis-1,4- linkages and optionally on at least one other diene elastomer, the natural rubber or synthetic polyisoprene in the case of a blend being present at a predominant content relative to the content of the other diene elastomer(s) used and on a reinforcing filler consisting:

a) either of carbon black used at a content of between 20 and 80 phr,
b) or of a blend of carbon black and a white filler, in which the overall filler content is between 20 and 80 phr, and preferably between 40 and 60 phr, said white filler being of silica and/or alumina type, comprising SiOH and/or AlOH surface functions selected from the group consisting of precipitated or fumed silicas, the aluminas or aluminosilicates, or else carbon blacks modified during or after synthesis, with a BET specific surface area of between 30 and 260 $m^2$/g.

**3.** Tyre according to either of Claims 1 and 2, **characterized in that** at least said radially outermost calendering layer of at least one protective layer has an electric resistivity per unit volume p such that log(p) is greater than 8.

**4.** Tyre according to one of Claims 1 to 3, **characterized in that** the metal reinforcing elements of at least said protective layer are cords having a flow rate of less than 5 $cm^3$/min in what is referred to as the permeability test.

**5.** Tyre according to one of Claims 1 to 4, **characterized in that** the reinforcing elements of said protective layer are oriented relative to the circumferential direction at an angle in the same direction as the angle formed by the reinforcing elements of the working crown layer radially adjacent thereto.

**6.** Tyre according to one of the preceding claims, **characterized in that** the maximum value of tan(δ), denoted tan(δ)max, of at least said radially outermost calendering layer of at least one protective layer is less than 0.080.

**7.** Tyre according to one of the preceding claims, **characterized in that** the crown reinforcement comprises at least one layer of circumferential reinforcing elements.

**8.** Tyre according to Claim 7, **characterized in that** the layer of circumferential reinforcing elements is positioned radially between two working crown layers.

**9.** Tyre according to either of Claims 7 and 8, said at least two working crown layers being formed of reinforcing elements inserted between two calendering layers of rubber compound, **characterized in that** the tensile elastic modulus at 10% elongation of at least one calendering layer of at least one working crown layer is less than 8.5 MPa, and **in that** the maximum value of tan(δ), denoted $\tan(\delta)_{max}$, of said at least one calendering layer of at least one working crown layer is less than 0.100.

**10.** Tyre according to Claim 9, **characterized in that** said at least one calendering layer of at least one working crown layer is an elastomer compound based on natural rubber or on synthetic polyisoprene with a predominance of cis-1,4- linkages and optionally on at least one other diene elastomer, the natural rubber or synthetic polyisoprene in the case of a blend being present at a predominant content relative to the content of the other diene elastomer(s) used, and on a reinforcing filler consisting:

a) either of carbon black with a BET specific surface area of greater than 60 $m^2/g$,

i. used at a content of between 20 and 40 phr when the compressed oil absorption number (COAN) of the carbon black is greater than 85,
ii. used at a content of between 20 and 60 phr when the compressed oil absorption number (COAN) of the carbon black is less than 85,

b) or of carbon black with a BET specific surface area of less than 60 $m^2/g$, regardless of its compressed oil absorption number, used at a content of between 20 and 80 phr and preferably of between 30 and 50 phr,
c) or of a white filler of silica and/or alumina type comprising SiOH and/or AlOH surface functions selected from the group consisting of precipitated or fumed silicas, the aluminas or aluminosilicates or else carbon blacks modified during or after synthesis with a BET specific surface area of between 130 and 260 $m^2/g$, and preferably greater than 150 $m^2$, used at a content of between 20 and 80 phr, and preferably between 30 and 50 phr,
d) or of a blend of carbon black described in (a) and/or of carbon black described in (b) and/or a white filler described in (c), in which the overall filler content is between 20 and 80 phr, and preferably between 40 and 60 phr.

**11.** Tyre according to one of the preceding claims, **characterized in that** said at least two working crown layers consist of reinforcing elements, preferably inextensible, crossed from one layer to the other, forming angles of between 10° and 45° with the circumferential direction.

**12.** Tyre according to one of the preceding claims, **characterized in that** the reinforcing elements of at least one layer of circumferential reinforcing elements are metal reinforcing elements having a secant modulus at 0.7% elongation of between 10 and 120 GPa and a maximum tangent modulus of less than 150 GPa.

**13.** Tyre according to one of the preceding claims, **characterized in that** the crown reinforcement also comprises a triangulation layer formed of metal reinforcing elements forming angles of greater than 45° with the circumferential direction.

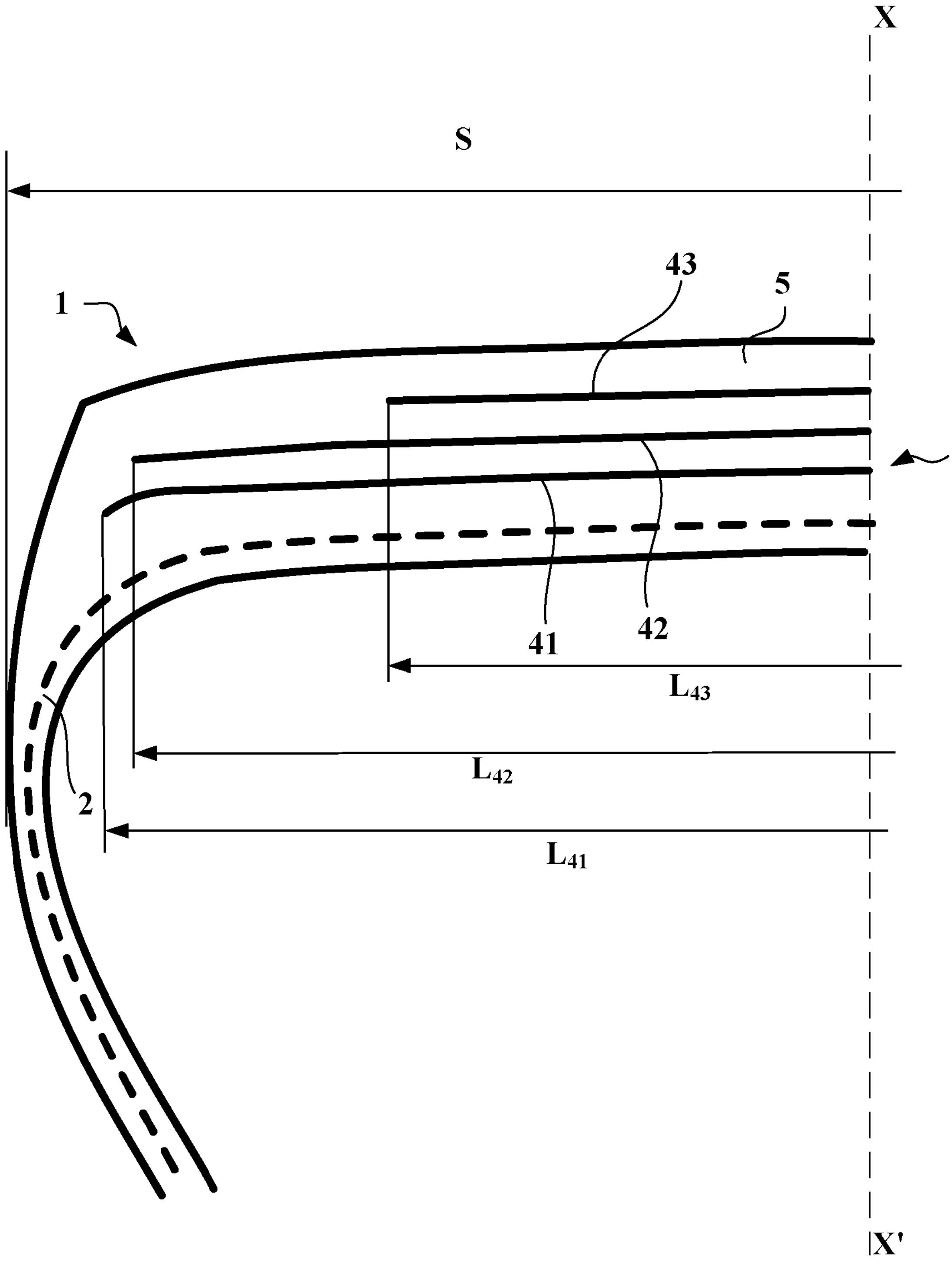


Figure

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2004076204 A
- WO 9924269 A
- FR 3022843 A1
- FR 3022841 A1
- FR 3022839 A1
- WO 9736724 A
- EP 0799854 A
- US 2003040553 A
- WO 9813428 A


### Littérature non-brevet citée dans la description


- **S. OTTO.** *Kautschuk Gummi Kunststoffe,* Juillet 2005, vol. 58
- *Plastics, Rubber and Composites Processing and Applications,* 1996, vol. 25 (7), 327
- *Rubber Chemistry and Technology,* 1996, vol. 69, 325
- **BRUNAUER ; EMMET ; TELLER.** *The Journal of the American Chemical Society,* Février 1938, vol. 60, 309
- *Conférence N° 24 du Meeting ACS, Rubber Division, Anaheim, Californie,* 06 Mai 1997